Europäisches Patentamt

European Patent Office

Office européen des brevets

(11) Numéro de publication: **0 313 705**
**A1**

## (12) DEMANDE DE BREVET EUROPEEN

(21) Numéro de dépôt: **87402447.4**

(22) Date de dépôt: **29.10.87**

(51) Int. Cl.4: **G09B 9/04 , G09B 19/16**

(43) Date de publication de la demande:
**03.05.89 Bulletin 89/18**

(84) Etats contractants désignés:
**AT BE CH DE ES GB IT LI LU NL SE**

(71) Demandeur: **Beltoise, Jean Pierre**
**25 La Vallée**
**F-91770 Saint Vrain(FR)**

(72) Inventeur: **Beltoise, Jean Pierre**
**25 La Vallée**
**F-91770 Saint Vrain(FR)**

(74) Mandataire: **DEGRET, Jacques**
**Cabinet Degret 24, place du Général Catroux**
**F-75017 Paris(FR)**

(54) **Dispositif pour l'enseignement et le bon contrôle de la conduite d'un véhicule automobile.**

(57) L'invention concerne un dispositif pour l'enseignement de la conduite automobile, et qui préconise que le conducteur doit être prêt à freiner lorsqu'il n'accélère pas et ne freine pas.

Le dispositif comporte un premier détecteur (3) du système d'accélération, un second détecteur (8) indiquant la position du pied du conducteur par rapport à la pédale de frein (2), des moyens à coïncidence (18), des moyens à retard (20), et des moyens indicateurs de sortie (23). Les moyens de sortie (23) sont activés et signalent la faute de conduite si le conducteur, après avoir libéré la pédale d'accélérateur (1) ou la pédale de frein (2), n'a pas, dans un délai prescrit, à nouveau accéléré, freiné ou encore placé son pied devant la pédale de frein.

EP 0 313 705 A1

# DISPOSITIF POUR L'ENSEIGNEMENT ET LE BON CONTROLE DE LA CONDUITE D'UN VEHICULE AUTOMOBILE

La présente invention est relative à un dispositif facilitant l'enseignement et le bon contrôle de la conduite d'un véhicule automobile.

On sait que, lors de la marche normale d'un véhicule automobile, le conducteur peut, avec son pied droit, soit maintenir son pied sur l'accélérateur ou un organe analogue pour commander la fourniture de l'énergie de propulsion au moteur, de manière à augmenter, maintenir ou diminuer la vitesse du véhicule, soit presser le pédale de frein, soit encore n'actionner aucune des deux pédales d'accélérateur et de frein.

Une méthode d'enseignement de la conduite préconise au conducteur, dans ce dernier cas, d'être prêt à freiner plutôt que d'être prêt à accélérer.

Pour cela, lorsqu'il n'actionne aucune des deux pédales, le conducteur doit impérativement placer son pied droit au voisinage immédiat de la pédale de frein et être ainsi prêt à freiner le plus rapidement possible en cas de nécessité urgente.

L'invention a pour but de fournir un dispositif permettant au conducteur de bien acquérir cette méthode, et/ou de contrôler ensuite cet enseignement.

A cet effet, le dispositif selon l'invention, pour l'enseignement et le bon contrôle de la conduite d'un véhicule automobile, ce véhicule comportant un système de commande du circuit de fourniture d'énergie de propulsion au moteur, et une pédale de frein commandant un circuit de freinage, est caractérisé par le fait qu'il comporte : des premiers moyens pour détecter l'état dudit système de commande et pour émettre un premier signal représentatif dudit état, ce premier signal ayant une première valeur pour l'état activé dudit système de commande, et une seconde valeur pour l'état désactivé de celui-ci ; des seconds moyens pour détecter la position du pied de freinage du conducteur par rapport à la pédale de frein et pour émettre un second signal représentatif de cette position, ce second signal ayant une première valeur correspondant à la présence du pied du conducteur sur la pédale de frein ou à l'aplomb de ladite pédale, et une seconde valeur correspondant à l'absence du pied sur la pédale de frein ou à son voisinage ; des moyens à coïncidence agencés pour recevoir les premier et second signaux et pour émettre un troisième signal de coïncidence ayant une première valeur quand l'un ou l'autre desdits premier et second signaux a sa première valeur, et une seconde valeur quand lesdits premier et second signaux ont simultanément leur seconde valeur ; des moyens à retard commandés par lesdits moyens à coïncidence et activés par le passage du troisième signal de sa première valeur à sa seconde valeur, ces moyens à retard étant agencés pour émettre un quatrième signal de commande prenant une première valeur quand le troisième signal de coïncidence a sa première valeur ou pendant une durée prédéterminée de temporisation après l'instant dudit passage, et passant à une seconde valeur à la fin de ladite durée de temporisation après l'instant de passage si le troisième signal de coïncidence est resté à sa seconde valeur; et des moyens de sortie commandés par lesdits moyens à retard et agencés pour être activés par ledit quatrième signal de commande quand celui-ci a sa seconde valeur, l'ensemble étant tel que les moyens de sortie sont activés si le conducteur, après avoir cessé de commander la fourniture d'énergie de propulsion au moteur ou après avoir enlevé son pied de la pédale de frein ou de son voisinage, n'a pas à nouveau, pendant ladite durée prédéterminée, soit commandé ladite fourniture, soit placé son pied sur la pédale de frein ou à l'aplomb de cette pédale.

Suivant un mode de réalisation préféré pratique, les premiers moyens agencés pour détecter l'état du système de commande d'accélération sont soit mécaniques et alors associés à la pédale ou au câble d'accélérateur, soit électriques et alors associés à l'injecteur d'un moteur à injection. Par exemple, ces premiers moyens peuvent être du type à contacteur mécanique de fin de course.

Quant aux seconds moyens, ils peuvent avantageusement être constitués par un détecteur à interruption d'un faisceau, par exemple lumineux ou infra-rouge, ou par un détecteur de proximité. Par exemple, ces seconds moyens peuvent comporter un émetteur et un récepteur qui sont disposés sensiblement verticalement immédiatement en avant de la pédale de frein. Avantageusement, ces seconds moyens ne sont activés que lorsqu'ils sont susceptibles d'entrer en fonction, c'est-à-dire quand le premier signal est à sa seconde valeur.

Les moyens à coïncidence et les moyens à retard peuvent avantageusement être constitués par des circuits logiques, notamment du type TTL, les moyens à coïncidence comportant une porte logique recevant lesdits premier et second signaux.

Les moyens à retard comportent une minuterie qui est excitée par le passage du troisième de sa première valeur à sa seconde valeur et qui est remise à zéro par le passage dudit troisième signal de sa seconde valeur à sa première valeur. Cette minuterie est avantageusement réglable, la durée de temporisation étant choisie dans la plage de valeurs de 0,2 à 2 secondes et de préférence entre 0,7 et 1,5 seconde.

Les moyens de sortie sont agencés pour indiquer au conducteur et/ou au moniteur si la méthode est correctement appliquée ; par exemple ces moyens de sortie peuvent être constitués par un indicateur optique, un indicateur sonore et/ou un organe de commande de fonction.

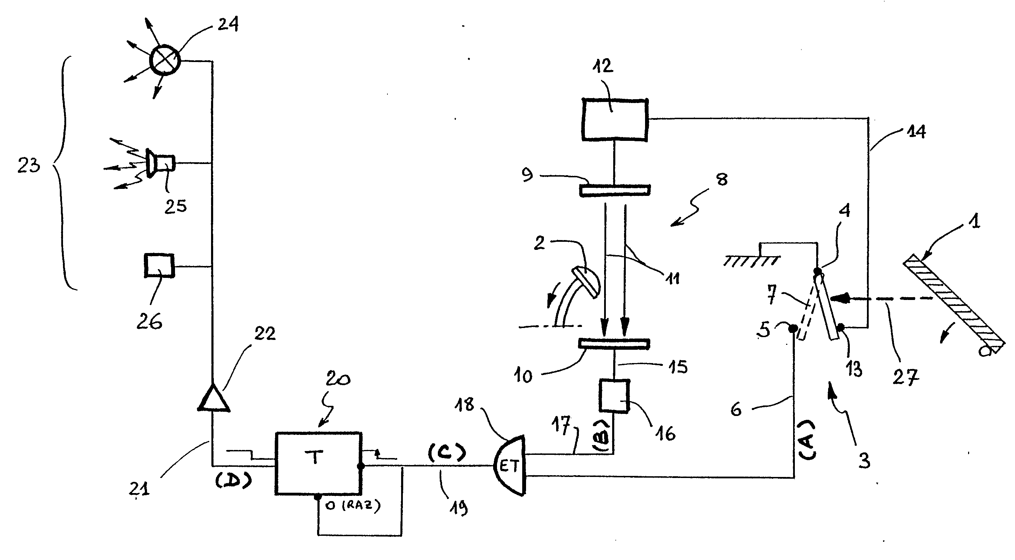

On comprendra bien l'invention à la lecture de la description qui va suivre et en référence au dessin annexé dont la figure unique montre un schéma d'un dispositif établi selon un mode de réalisation préféré de l'invention.

Sur le dessin, on a partiellement et schématiquement représenté un véhicule par une pédale d'accélérateur (1) et une pédale de frein (2). Suivant la méthode d'enseignement de la conduite du véhicule, le conducteur, lorsqu'il n'actionne ni la pédale d'accélérateur (1), ni la pédale de frein (2), doit être prêt à freiner plutôt qu'à accélérer. Par conséquent, dans une telle situation, son pied droit doit être situé à proximité de la pédale de frein, et de préférence à l'aplomb de celle-ci, pour que, si le besoin s'en fait sentir, le freinage puisse être effectué le plus rapidement possible.

La pédale d'accélérateur (1) appartient à un système de commande de fourniture de l'énergie de propulsion au moteur. Ce système comporte généralement, outre la pédale d'accélérateur (1), un câble d'accélérateur. Le moteur du véhicule est généralement du type à combustion interne, à carburateur ou à injection, mais il n'est pas à exclure qu'il soit du type électrique. Dans tous les cas, ce système de commande détermine, suivant la position de la pédale d'accélérateur (1), l'alimentation ou la non alimentation du moteur en énergie de propulsion.

Suivant l'invention, on associe à ce système de commande - mécaniquement ou électriquement - des premiers moyens (3) pour détecter l'état dudit système. Ces moyens (3) sont agencés pour émettre un premier signal (A) représentatif de cet état, ce premier signal avant soit une première valeur pour l'état activé du système de commande, c'est-à-dire pour l'état enfoncé de la pédale (1), soit une seconde valeur pour l'état désactivé du système, c'est-à-dire quand la pédale (1) est relachée et que le véhicule commence sa décélération.

Dans l'exemple représenté, ces premiers moyens sont un contacteur, par exemple du type à fin de course, qui détecte par une liaison mécanique telle que schématisée par la flèche (27) la position de la pédale (1) ou du câble d'accélérateur et qui peut occuper deux positions suivant l'état de ce système. Ce contacteur est par exemple constitué par un inverseur dont la borne centrale (4) est reliée à la masse et dont une première borne de sortie (5) est reliée par un fil (6) au reste du dispositif. La borne (5) est celle qui est reliée à la borne centrale (4) par le contact (7) quand la pédale d'accélérateur (1) est enfoncée.

Le dispositif comporte également des seconds moyens (8) pour détecter la position du pied droit du conducteur par rapport à la pédale de frein (2) et pour émettre un deuxième signal (B) représentatif de cette position, ce second signal ayant soit une première valeur correspondant à la présence du pied sur la pédale (2) ou à l'aplomb de cette pédale, soit une seconde valeur correspondant à l'absence du pied sur la pédale ou à son voisinage. Dans l'exemple représenté, ces seconds moyens détecteurs (8) sont constitués par un détecteur à interruption de faisceau, comportant un émetteur (9) et un récepteur (10) disposés sensiblement verticalement immédiatement en avant de la pédale de frein (2). L'émetteur (9), lorsqu'il est activé, envoie vers le récepteur (10) un faisceau (11), par exemple lumineux ou infra-rouge, qui est interrompu par le pied droit du conducteur lorsque celui-ci appuie sur la pédale de frein ou est situé à son voisinage immédiat, à l'aplomb de ladite pédale.

L'émetteur (9) est alimenté par un circuit (12) qui, de préférence, n'est activé que lorsque le détecteur (8) est susceptible d'entrer en action, c'est-à-dire quand la pédale d'accélérateur (1) est relachée. Pour cela, comme représentée sur le dessin, la deuxième borne de sortie (13) de l'inverseur (3) est reliée au circuit de commande (12) par un fil (14) qui n'est relié à la masse que lorsque la pédale d'accélérateur (1) est relachée. Lorsque le contact (7) de l'inverseur (3) est dans la position représentée en tirets, la borne (13) est en l'air et, par conséquent, le circuit de commande (12) n'est pas activé.

Le récepteur (10) est relié par un fil (15) à une unité de traitement (16) qui délivre le deuxième signal (B) par un fil (17) au reste du dispositif.

Dans l'exemple de réalisation adopté, les signaux (A) et (B) sont du type logique et ils constituent les deux entrées d'un circuit de coïncidence (18), constitué notamment par une porte ET, dont le signal de sortie, dit troisième signal (C), présente soit une première valeur quand l'un ou l'autre des signaux (A) et (B) a sa première valeur, soit une seconde valeur quand ces deux signaux (A) et (B) ont simultanément leur seconde valeur ; en d'autres termes, le troisième signal de coïncidence (C) présente sa première valeur quand la pédale d'accélérateur (1) est enfoncée ou quand le pied du conducteur appuie sur la pédale de frein (2) ou est situé à son voisinage, et sa seconde valeur dans le cas contraire, c'est-à-dire quand à la fois la pédale d'accélérateur (1) est relachée et le pied du conducteur n'appuie pas sur la pédale de frein (2) et n'est pas situé à son voisinage immédiat, et donc ne coupe pas le faisceau (11).

Le troisième signal (C), qui est délivré sur la ligne de sortie (19) du circuit à coïncidence (18), commande des moyens à retard (20) qui émettent un quatrième signal (D) et sont agencés de manière à être activés par le passage du signal (C) de sa première valeur à sa seconde valeur, de sorte que le signal de sortie (D) desdits moyens à retard (20) présente une première valeur quand le signal (C) est à sa première valeur ainsi que pendant la durée prédéterminée de temporisation, après l'instant dudit passage, et une seconde valeur à la fin de ladite durée de temporisation si le signal (C), lorsqu'il est passé de sa première à sa seconde valeur, est resté à sa seconde valeur. Comme schématiquement représenté à titre d'exemple, les moyens à retard (20) sont inhibés ou remis à zéro dès que le signal (C) est à sa première valeur. En d'autres termes, si les moyens à retard (20) ont été activés par le passage du signal (C) de sa première valeur à sa seconde valeur, pour le démarrage de la durée de temporisation, le cycle est annulé si, pendant la durée de temporisation, le signal (C) revient à sa première valeur, soit parce que le conducteur a réaccéléré, soit parce qu'il a coupé le faisceau (11) avec son pied droit.

Les moyens à retard (20) comportent une minuterie qui peut avantageusement être constituée par un circuit TTL monostable réglable. La durée de temporisation est alors choisie en fonction de l'enseignement et/ou de la personnalité du conducteur. Elle peut être réglée entre l'instantané et quelques secondes, par exemple au dixième de seconde près. Avantageusement, cette durée de temporisation est choisie dans la plage de valeurs de 0,2 à 2 secondes et de préférence entre 0,7 et 1,5 seconde.

La ligne de sortie (21) des moyens à retard (20) reçoit le quatrième signal (D) qui, éventuellement après amplification en (22), est délivré à des moyens de sortie (23) qui indiquent au conducteur et/ou au moniteur comment la méthode d'enseignement ci-dessus est appliquée. Par exemple, ces moyens de sortie peuvent comporter un indicateur optique (24), ou un indicateur sonore (25), ou encore un organe (26) de commande de fonction, par exemple pour le pilotage d'un compteur ou d'un enregistreur. Il est bien clair que ces moyens de sortie (23) commandés par les moyens à retard (20) ne sont activés que par la seconde valeur de quatrième signal (D) et ne fonctionnent donc que si, à la fois, la pédale d'accélérateur est relâchée et le pied droit du conducteur n'est pas à l'aplomb ou en appui sur la pédale de frein. En revanche, tant que le quatrième signal (D) est à sa première valeur, soit parce que le conducteur appuie sur la pédale d'accélérateur ou sur la pédale de frein, soit parce que son pied coupe le faisceau (11), soit encore parce que la durée de temporisation n'est pas écoulée, les moyens de sortie (23) ne sont pas activés.

Le dispositif selon l'invention présente un grand intérêt pour faciliter l'enseignement de la méthode indiquée, en permettant au conducteur d'être informé de ses erreurs et au moniteur de connaître les erreurs du conducteur à cet égard, sans avoir à surveiller visuellement la position du pied du conducteur. Il peut permettre également de contrôler sur tout véhicule que la conduite habituelle, après ou sans enseignement, est pratiquée selon les règles idéales qui ont été exposées en préambule.

Bien que l'invention ait été décrite ci-dessus suivant un mode de réalisation préféré particulier, il est bien entendu que le dispositif peut être établi suivant des variantes, notamment quant à la nature et à la structure des moyens détecteurs (3) et (8), et quant à la nature et à la structure des moyens à coïncidence (18) et des moyens à retard (20).

Par exemple, les moyens à coïncidence et/ou les moyens à retard peuvent être du type électromécanique. Par ailleurs, les moyens détecteurs (8) peuvent par exemple être constitués par un détecteur de proximité ou par un détecteur d'approche magnétique.

Il est également possible, suivant l'invention, de faire détecter par les premiers moyens détecteurs (3) directement la fourniture de l'énergie de propulsion au moteur, par exemple par la mesure du débit de carburant vers le moteur, notamment au niveau de l'injecteur, dans le cas d'un moteur à combustion interne, ou par la mesure du courant électrique délivré au moteur, dans le cas d'un véhicule à propulsion électrique. Pour ces deux cas, les moyens mécaniques (27) mesurant la "fin de course" et associant la pédale ou le câble d'accélérateur aux moyens détecteurs (3) seront remplacés par des moyens électriques, placés à la sortie de l'injecteur ou aux bornes de la batterie, et agencés pour contrôler la cessation de la fourniture d'énergie au moteur et délivrer immédiatement l'information correspondante aux premiers moyens (3) dont le signal de sortie (A) passera de la première à la seconde valeur.

Par conséquent, l'invention n'est pas limitée au mode de réalisation qui a été décrit ; on pourrait au contraire concevoir diverses variantes sans sortir pour autant de son cadre. Notamment, on peut concevoir que l'émetteur (9) soit constamment alimenté et que le faisceau (11) qu'il délivre soit permanent. Dans ce cas, le circuit (12) est toujours relié à la masse, quelle que soit la position du contact (7) ; le signal (B) aura le plus fréquemment sa seconde valeur et il ne prendra sa première valeur que lorsque le pied droit du conducteur coupera le faisceau (11) pour freiner ou se préparer au freinage. Toutefois, dans son principe, le fonctionnement de cette variante sera rigoureusement identique à celui de l'exemple décrit à titre principal, à savoir que, si le conducteur décélère sans mettre le pied au dessus de la pédale de frein pour couper le faisceau, le troisième signal de coïncidence (C) passera de sa première valeur à sa seconde valeur. Ensuite, pendant et après la durée de temporisation, le dispositif de l'invention ne pourra être désarmé que si le conducteur reprend sa vitesse ou accélère en appuyant sur la pédale d'accélérateur ou si, en laissant la décélération, le conducteur prépare son pied sur le frein, voire freine, de manière à couper le faisceau (11).

**Revendications**

1. Dispositif pour l'enseignement et le bon contrôle de la conduite d'un véhicule automobile, ce véhicule comportant un système (1) de commande du circuit de fourniture d'énergie de propulsion au moteur, et une pédale de frein (2) commandant un circuit de freinage, caractérisé par le fait qu'il comporte : des premiers moyens (3) pour détecter l'état dudit système de commande (1) et pour émettre un premier signal (A) représentatif dudit état, ce premier signal ayant une première valeur pour l'état activé dudit système de commande, et une seconde valeur pour l'état désactivé de celui-ci; des seconds moyens (8) pour détecter la position du pied de freinage du conducteur par rapport à la pédale de frein (2) et pour émettre un second signal (B) représentatif de cette position, ce second signal ayant une première valeur correspondant à la présence du pied du conducteur sur la pédale de frein (2) ou à l'aplomb de ladite pédale, et une seconde valeur correspondant à l'absence du pied sur la pédale de frein ou à son voisinage ; des moyens à coïncidence (18) agencés pour recevoir les premier et second signaux (A), (B) et pour émettre un troisième signal de coïncidence (C) ayant une première valeur quand l'un ou l'autre desdits premier et second signaux (A), (B) a sa première valeur, et une seconde valeur quand lesdits premier et second signaux ont simultanément leur seconde valeur ; des moyens à retard (20) commandés par lesdits moyens à coïncidence (18) et activés par le passage du troisième signal (C) se sa première valeur à sa seconde valeur, ces moyens à retard (20) étant agencés pour émettre un quatrième signal de commande (D) prenant une première valeur quand le troisième signal de coïncidence (C) a sa première valeur ou pendant une durée prédéterminée de temporisation après l'instant dudit passage, et passant à une seconde valeur à fin de ladite durée de temporisation après l'instant de passage si le troisième signal de coïncidence (C) est resté à sa seconde valeur ; et des moyens de sortie (23) commandés par lesdits moyens à retard (20) et agencés pour être activés par ledit quatrième signal de commande (D) quand celui-ci a sa seconde valeur, l'ensemble étant tel que les moyens de sortie (23) sont activés si le conducteur, après avoir cessé de commander la fourniture d'énergie de propulsion au moteur ou après avoir enlevé son pied de la pédale de frein (2) ou de son voisinage, n'a pas à nouveau, pendant ladite durée prédéterminée, soit commandé ladite fourniture, soit placé son pied sur la pédale de frein (2) ou à l'aplomb de cette pédale.

2. Dispositif selon la revendication 1, caractérisé par le fait que les premiers moyens (3) agencés pour détecter l'état du système de commande d'accélération sont soit mécaniques et alors associés à la pédale (1) ou au câble d'accélérateur, soit électriques et alors associés à l'injecteur d'un moteur à injection.

3. Dispositif selon la revendication 2, caractérisé par le fait que les premiers moyens (3) sont du type à contacteur mécanique de fin de course.

4. Dispositif selon l'une des revendications 1 à 3, caractérisé par le fait que les seconds moyens (8) appartiennent au groupe constitué par un détecteur à interruption de faisceau, lumineux ou infrarouge par exemple, et un détecteur de proximité.

5. Dispositif selon la revendication 4, caractérisé par le fait que les seconds moyens (8) comportent un émetteur (9) et un récepteur (10) disposés sensiblement verticalement immédiatement en avant de la pédale de frein (2).

6. Dispositif selon l'une des revendications 1 à 5, caractérisé par le fait qu'il comporte des moyens (12) d'alimentation des seconds moyens (8) qui sont activés quand le premier signal (A) présente sa seconde valeur.

7. Dispositif selon l'une des revendications 1 à 6, caractérisé par le fait que les moyens à coïncidence (18) comportent une porte logique recevant lesdits premier et second signaux (A), (B).

8. Dispositif selon l'une des revendications 1 à 7, caractérisé par le fait que les moyens à retard (20) comportent une minuterie qui est excitée par le passage dudit troisième signal de sa première valeur à sa seconde valeur et qui est remise à zéro par le passage dudit troisième signal de sa seconde valeur à sa première valeur.

9. Dispositif selon la revendication 8 caractérisé par la fait que la minuterie est réglable, et que la durée de temporisation est choisie dans la plage de valeurs de 0,2 à 2 secondes et de préférence entre 0,7 et 1,5 seconde.

10. Dispositif selon l'une des revendications 1 à 9, caractérisé par le fait que les moyens de sortie (23) appartiennent au groupe constitué par un indicateur optique (24), un indicateur sonore (25) et un organe (26) de commande de fonction.

Office européen
des brevets

# RAPPORT DE RECHERCHE EUROPEENNE

Numero de la demande

EP 87 40 2447

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 598 008 (J.P. BELTOISE) <br> * En entier * <br> --- | 1 | G 09 B 9/04 <br> G 09 B 19/16 |
| A | DE-A-3 301 704 (R. FOERST) <br> * Page 5, lignes 1-10,20-30; pages 6,7; figures * <br> --- | 1-3,6-10 | |
| A | FR-A-2 439 443 (G. LEYRIT) <br> * En entier * <br> --- | 1 | |
| A | FR-A-2 110 825 (C. BOIVIN) <br> * Page 4; figures * <br> --- | | |
| A | GB-A-2 014 523 (K. FROGGATT) <br> * Page 1, lignes 30-41; figures 1,2 * <br> --- | 1,8,9 | |
| A | US-A-4 479 784 (R. MALLINSON et al.) <br> * Colonnes 1,2 * <br> ----- | 1,4,5 | |

DOMAINES TECHNIQUES RECHERCHES (Int. Cl.4)

G 09 B

Le présent rapport a été établi pour toutes les revendications

| Lieu de la recherche | Date d'achèvement de la recherche | Examinateur |
|---|---|---|
| LA HAYE | 07-06-1988 | ODGERS M.L. |